(19) Europäisches Patentamt
European Patent Office
Office européen des brevets

(11) **EP 1 179 911 B1**

(12) **FASCICULE DE BREVET EUROPEEN**

(45) Date de publication et mention
de la délivrance du brevet:
**13.03.2013 Bulletin 2013/11**

(51) Int Cl.:
***H04L 1/20*** (2006.01)

(21) Numéro de dépôt: **01402023.4**

(22) Date de dépôt: **26.07.2001**

(54) **Procédé pour évaluer la qualité d'une liaison radio dans un système de radiocommunications mobiles**

Verfahren zum Beurteilen der Qualität einer Funkverbindung in einem mobilen Funkkommunikationssystem

Quality assessment method for a radio link in a mobile radio communications system

(84) Etats contractants désignés:
**AT BE CH CY DE DK ES FI FR GB GR IE IT LI LU MC NL PT SE TR**

(30) Priorité: **11.08.2000 FR 0010590**

(43) Date de publication de la demande:
**13.02.2002 Bulletin 2002/07**

(73) Titulaire: **Alcatel Lucent
75007 Paris (FR)**

(72) Inventeur: **Agin, Pascal
94370 Sucy en Brie (FR)**

(74) Mandataire: **El Manouni, Josiane et al
Alcatel-Lucent International
32, avenue Kléber
92700 Colombes (FR)**

(56) Documents cités:
**WO-A-99/12304          GB-A- 2 330 737
US-A- 5 828 672**

• **CHAKRABORTY S S ET AL: "AN ADAPTIVE ARQ SCHEME WITH PACKET COMBINING FOR TIME VARYING CHANNELS" IEEE COMMUNICATIONS LETTERS,US,IEEE SERVICE CENTER, PISCATAWAY,US, vol. 3, no. 2, février 1999 (1999-02), pages 52-54, XP000824092 ISSN: 1089-7798**

**Description**

La présente invention concerne d'une manière générale les systèmes de radiocommunications mobiles.

Dans ces systèmes, divers traitements sont nécessaires pour mettre les informations à transmettre sous une forme adaptée à leur transmission sur l'interface radio.

Notamment, une protection contre les erreurs de transmission est obtenue au moyen d'un codage (tel que notamment un codage correcteur d'erreurs) destiné à introduire une redondance dans les informations transmises. Le taux de codage est défini comme le rapport du nombre de bits d'information à transmettre sur le nombre de bits transmis ou bits codés. Le codage est généralement opéré sur des séquences de bits d'information ou blocs. Pour des ressources radio allouées données, plus le taux de codage est élevé, et plus le débit de bits d'information est élevé. Cependant, un taux de codage élevé nécessite de bonnes conditions radio, sinon la qualité de service est dégradée.

Pour des services de données, une protection supplémentaire contre les erreurs de transmission est généralement prévue, consistant généralement en une re-transmission de blocs non correctement reçus, selon une technique appelée aussi ARQ (pour "Automatic Repeat reQuest" en anglais). Les blocs non correctement reçus peuvent être des blocs dans lesquels des erreurs sont détectées (au moyen d'un code détecteur d'erreurs), ou ne peuvent être corrigées (au moyen d'un code correcteur d'erreurs). L'état, correct ou non, des blocs reçus est signalé par le récepteur à l'émetteur au moyen de messages dits d'acquittement (ou ACK, pour "ACKnowledgment" en anglais) ou de non-acquittement (ou NACK, pour "Non-ACKnowledgment" en anglais).

Un autre traitement consiste en une modulation, permettant d'obtenir un signal analogique porteur des informations à transmettre. Différentes techniques de modulation sont connues, caractérisées par leur efficacité spectrale, c'est-à-dire leur capacité à transmettre un nombre plus ou moins élevé de bits par symbole, pour une même bande de fréquences allouée. Par exemple, dans le système GPRS (pour "General Packet Radio Service" en anglais) une seule modulation est possible, la modulation GMSK qui permet de transmettre un bit par symbole, et dans le système EGPRS (pour "Enhanced General Packet Radio Service") deux modulations sont possibles, la modulation GMSK qui permet de transmettre un bit par symbole et la modulation 8PSK qui permet de transmettre trois bits par symbole. Plus l'efficacité spectrale de la modulation est élevée, et plus le débit de bits transmis peut être élevé. Cependant, une efficacité spectrale élevée nécessite de bonnes conditions radio, sinon la qualité de service est dégradée.

Différentes techniques destinées à optimiser les performances de ces systèmes peuvent être utilisées, telles que notamment les techniques suivantes:

- adaptation de lien (ou « link adaptation » en anglais): cette technique permet d'adapter dynamiquement le schéma de codage et/ou de modulation utilisé en fonction des conditions radio; notamment, lorsque les conditions radio sont bonnes, on peut augmenter le taux de codage et/ou utiliser une modulation à plus haute efficacité spectrale, pour augmenter le débit; par exemple, comme défini dans le document "GSM 03.64 Version 8.2.0 Release 1999" publié par l'ETSI, quatre schémas de codage (CS1 à CS4) sont possibles dans le système GPRS, et neuf schémas de codage et de modulation (MCS1 à MCS9) sont possibles dans le système EGPRS ;

- re-sélection de cellule: ces systèmes ayant en général une architecture cellulaire, cette technique permet de sélectionner, en fonction de critères radio, et éventuellement en fonction d'autres critères, une meilleure cellule vers laquelle transférer une communication en cours, selon la technique dite de transfert inter-cellulaire, ou « handover » en anglais;

- ...etc.

Dans ces sytèmes, il est donc très important de pouvoir évaluer le mieux possible les conditions radio; sinon les performances peuvent être dégradées.

Généralement, la qualité d'une liaison radio est représentée par un ou plusieurs indicateurs de qualité tels que notamment le BER brut (ou "raw Bit Error Rate" en anglais), le BLER (pour "Block Erasure Rate" en anglais), le SIR (pour "Signal-to-Interference Ratio" en anglais), ...etc.

Le BER brut est obtenu en comparant des données reçues, avant décodage correcteur d'erreurs, avec des données correspondantes obtenues après décodage correcteur d'erreurs, puis re-codées au moyen du même code correcteur d'erreurs qu'en émission.

Le BLER correspond au taux de blocs de données non correctement reçus. Lorsqu'on utilise la technique de re-transmission, le BLER peut aussi, à la différence des autres indicateurs de qualité, être déterminé en émission, à partir des messages ACK/NACK transmis par le récepteur. Les algorithmes tels que par exemple les algorithmes d'adaptation de lien ou de re-sélection de cellule étant généralement mis en oeuvre dans le réseau, le réseau peut ainsi lui-même déterminer le BLER, pour le sens descendant, sans qu'il soit nécessaire que la station mobile reporte au réseau la valeur de BLER qu'elle détermine.

Un inconvénient des indicateurs de qualité tels que le BER brut ou le SIR est que, contrairement au BLER, ils nécessitent une estimation pour être obtenus, d'où un risque d'erreurs et donc de dégradation de performances de ces systèmes.

Un autre inconvénient des indicateurs de qualité tels que le BER brut ou le SIR est qu' ils ne sont pas directement représentatifs des performances. Ces indicateurs de qualité sont en effet représentatifs de la qualité du canal de transmission, or la relation entre la qualité de service et la qualité du canal de transmission n'est pas fixe mais dépend de nombreux facteurs tels que l'environnement, la vitesse de la station mobile, ...etc. De ce point de vue, le BLER est un critère plus pertinent, ou plus représentatif des performances.

Le BLER n'est cependant pas le critère le plus pertinent dans tous les cas.

Par exemple, dans les systèmes dans lesquels plusieurs schémas de codage et/ou de modulation sont possibles, tels que par exemple les systèmes GPRS et EGPRS, le BLER, contrairement à d'autres indicateurs de qualité tels que le BER brut ou le SIR, dépend du schéma de codage et/ou de modulation utilisé.

Ainsi, pour le système GPRS, le document WO 99/12304 propose d'estimer la valeur du BLER qui serait obtenue pour chaque schéma de codage, à partir de calculs statistiques sur des indicateurs de qualité obtenus tels que le BER brut ou le SIR, combinés à des résultats d'expériences ou de simulations préalables. Ce document ne propose donc pas d'utiliser d'autres indicateurs de qualité que le BER brut ou le SIR, et propose une technique complexe pour estimer le BLER à partir des indicateurs de qualité ainsi obtenus tels que le BER brut ou le SIR.

De même, lorsqu'on utilise la technique de re-transmission de blocs non correctement reçus, le BLER ne constitue pas non plus le critère le plus pertinent.

Il y a également d'autres cas où le BLER ne constitue pas un critère satisfaisant, notamment lorsqu'on utilise la technique dite de redondance incrémentale (ou "incremental redundancy" en anglais). Cette technique est une technique de re-transmission plus élaborée et plus efficace que celle mentionnée précédemment. Au lieu de re-transmettre un bloc avec toujours le même schéma de codage, elle consiste à re-transmettre le bloc avec un schéma de codage différent à chaque fois, et à utiliser conjointement toutes les re-transmissions successives du bloc pour réduire la probabilité de ne pas le décoder correctement. Les blocs peuvent alors être tous transmis sans protection lors de leur première transmission. Par exemple, le taux de codage effectif est 1 après la première transmission, ½ après la première re-transmission, 1/3 après la deuxième re-transmission, ...etc. Cette technique permet donc également (comme la technique d'adaptation de liaison) d'augmenter le débit utile, mais comme le BLER peut alors être beaucoup plus élevé que dans le cas où cette technique n'est pas utilisée, ce critère n'est pas non plus le plus pertinent.

Le document GB 2 330 737 propose un indicateur de qualité obtenu en déterminant la différence entre un nombre de paquets correctement reçus (ou alternativement un nombre de paquets dont la re-transmission est requise) et un nombre de paquets transmis. Cependant, ce critère ne constitue pas non plus le critère le plus pertinent, notamment lorsqu'on utilise des techniques telles que les techniques d'adaptation de lien ou de redondance incrémentale rappelées précédemment.

Un besoin existe donc pour un indicateur de qualité qui permettrait notamment d'éviter les divers inconvénients précités, et notamment qui serait pertinent pour la plupart des systèmes, tout en étant précis et relativement simple à calculer.

Un objet de la présente invention est ainsi un procédé pour évaluer la qualité d'une liaison radio dans un système de radiocommunications mobiles, ce procédé étant essentiellement caractérisé en ce que ladite qualité est évaluée à partir du débit net transmis sur ladite liaison.

Suivant une autre caractéristique, les données transmises sur ladite liaison étant obtenues par codage de blocs de bits d'information, le débit net est obtenu en calculant:

$$R_{net} = \frac{1}{T} \sum_{i=0}^{NB\_RECEIVED-1} N_i$$

où NB_RECEIVED est le nombre de blocs correctement reçus pendant une période T donnée, et $N_i$ est le nombre de bits d'information du i-ème bloc correctement reçu.

Suivant une autre caractéristique, ladite qualité est évaluée à partir du débit net relatif, c'est-à-dire du rapport entre le débit net et le débit brut.

Suivant une autre caractéristique, le rapport entre le débit net et le débit brut est obtenu en calculant:

$$\frac{R_{net}}{R_0} = \frac{\displaystyle\sum_{i=0}^{NB\_RECEIVED-1} N_i}{\displaystyle\sum_{i=0}^{NB\_SENT-1} N_i^{(c)}}$$

où NB_SENT est le nombre de blocs transmis pendant une période donnée, NB_RECEIVED est le nombre de blocs correctement reçus correspondants, $N_i^{(c)}$ est le nombre de bits du i-ème bloc transmis, et $N_i$ est le nombre de bits d'information du i-ème bloc correctement reçu.

Suivant une autre caractéristique, le nombre de bits des blocs transmis étant fonction du schéma de modulation utilisé, le débit brut est déterminé pour un schéma de modulation donné correspondant à une modulation dite de référence, quel que soit le schéma de modulation utilisé.

Suivant une autre caractéristique, le rapport entre le débit net et le débit brut est obtenu en calculant:

$$\frac{R_{net}}{R_0} = \frac{\displaystyle\sum_{i=0}^{NB\_RECEIVED-1} N_i}{NB\_SENT * N^{(c)}}$$

où NB_SENT est le nombre de blocs transmis pendant une période donnée, NB_RECEIVED est le nombre de blocs correctement reçus correspondants, $N^{(c)}$ est le nombre de bits d'un bloc transmis avec un schéma de modulation donné correspondant à une modulation dite de référence, et $N_i$ est le nombre de bits d'information du i-ème bloc correctement reçu.

Suivant une autre caractéristique, ladite modulation de référence est une modulation de plus faible efficacité spectrale.

Suivant une autre caractéristique, les blocs transmis, ou blocs radio, pouvant comporter un ou plusieurs blocs, ou blocs de données, suivant le schéma de modulation utilisé, le rapport entre le débit net et le débit brut est obtenu en calculant :

$$\frac{R_{net}}{R_0} = \frac{\displaystyle\sum_{i=0}^{NB\_RECEIVED-1} \frac{N_i}{n_i}}{\displaystyle\sum_{i=0}^{NB\_SENT-1} \frac{N_i^{(c)}}{n_i'}}$$

où NB_SENT est le nombre de blocs de données transmis pendant une période donnée, NB_RECEIVED est le nombre de blocs de données correctement reçus correspondants, $N_i^{(c)}$ est le nombre de bits dans le bloc radio comportant le i-ème bloc de données transmis , $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis) .

Suivant une autre caractéristique, les blocs transmis, ou blocs radio, pouvant comporter un ou plusieurs blocs, ou blocs de données, suivant le schéma de modulation utilisé, le rapport entre le débit net et le débit brut est obtenu en calculant :

$$\frac{R_{net}}{R_0} = \frac{\displaystyle\sum_{i=0}^{NB\_RECEIVED-1} \frac{N_i}{n_i}}{\displaystyle\sum_{i=0}^{NB\_SENT-1} \frac{N^{(c)}}{n_i'}}$$

où NB_SENT est le nombre de blocs de données transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis) .

Suivant une autre caractéristique, le rapport entre le débit net et le débit brut est obtenu en calculant :

$$\frac{R_{net}}{R_0} = \frac{\displaystyle\sum_{i=0}^{NB\_RECEIVED-1} \frac{\rho_i}{n_i}}{\displaystyle\sum_{i=0}^{NB\_SENT-1} \frac{1}{n_i'}}$$

avec $\rho_i = N_i / N^{(c)}$.

Un autre objet de la présente invention est un système de radiocommunications mobiles, ce système étant essentiellement caractérisé en ce qu'il comporte des moyens pour évaluer la qualité d'une liaison radio à partir du débit net transmis sur ladite liaison.

Suivant une autre caractéristique, ladite liaison est une liaison montante.

Suivant une autre caractéristique, ladite liaison est une liaison descendante.

Un autre objet de la présente invention est une entité de réseau de radiocommunications mobiles, cette entité étant essentiellement caractérisée en ce qu'elle comporte des moyens pour évaluer la qualité d'une liaison radio, à partir du débit net transmis sur ladite liaison.

Suivant une autre caractéristique, ladite liaison est une liaison montante.

Suivant une autre caractéristique, ladite liaison est une liaison descendante.

Un autre objet de la présente invention est une station mobile, cette station mobile étant essentiellement caractérisée en ce qu'elle comporte des moyens pour évaluer la qualité d'une liaison radio, à partir du débit net transmis sur ladite liaison.

Suivant une autre caractéristique, ladite liaison est une liaison descendante.

Suivant une autre caractéristique, ladite liaison est une liaison montante.

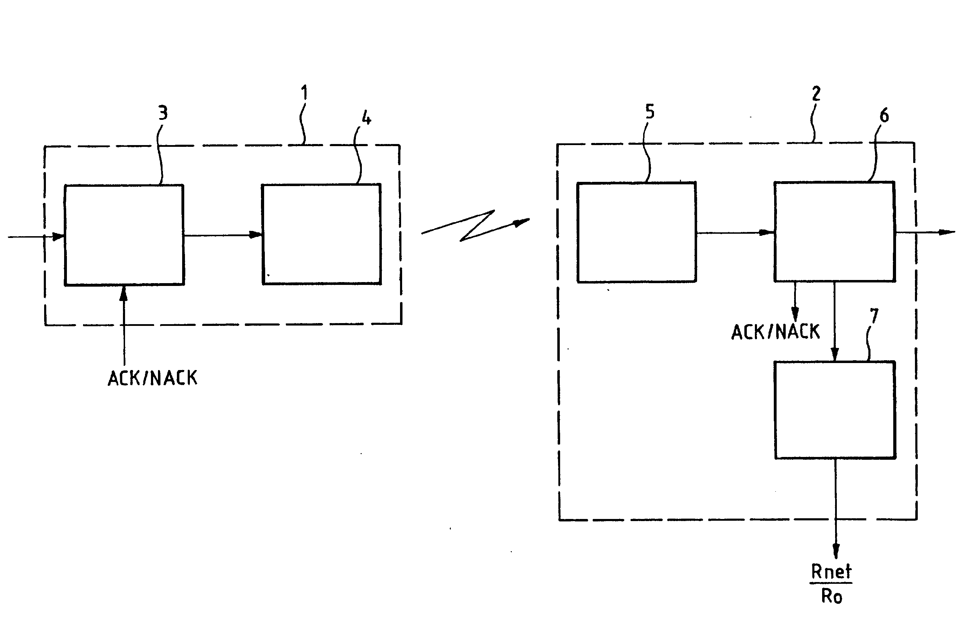

D'autres objets et caractéristiques de la présente invention apparaîtront à la lecture de la description suivante d'exemples de réalisation, faite en relation avec la figure ci-annexée destinée à illustrer schématiquement une liaison radio dont la qualité est évaluée au moyen d'un procédé suivant l'invention.

La présente invention propose donc d'utiliser un critère lié au débit net.

Le débit brut $R_{gross}$ est défini comme le débit de bits transmis sur l'interface radio. Le débit net $R_{net}$ est le débit obtenu après déduction, du débit brut, de tout ce qui n'est pas utile pour l'utilisateur, comme la redondance introduite par le codage, ou les blocs non correctement reçus.

Le débit net peut s'exprimer de la manière suivante:

$R_{net}$ = p $R_{gross}$(1-BLER), où p désigne le taux de codage (supposé fixe dans cette expression), et BLER désigne le taux de blocs non correctement reçus (ou retransmis).

Afin d'avoir une expression plus générale qui soit valable même avec un taux de codage variable, une première expression possible d'un indicateur de qualité suivant l'invention est la suivante:

$$R_{net} = \frac{1}{T} \sum_{i=0}^{NB\_RECEIVED-1} N_i$$

où NB_RECEIVED est le nombre de blocs correctement reçus pendant une période de temps T et $N_i$ est le nombre de bits d'information dans le i-ème bloc reçu correctement. Le nombre $N_i$ dépend du schéma de codage et/ou de modulation appliqué dans le i-ème bloc reçu. Plus le taux de codage est élevé, et/ou plus l'efficacité spetcrale de la modulation est élevée, et plus ce nombre est élevé. $R_{net}$ peut prendre n'importe quelle valeur positive.

Le débit net $R_{net}$ peut cependant ne pas être le critère le plus approprié car $R_{net}$ ne dépend pas seulement des conditions radio mais aussi des ressources radio allouées (pour des conditions radio données, plus les ressources radio allouées sont importantes, plus $R_{net}$ est élevé). Par conséquent, pour avoir un meilleur indicateur de qualité, il peut être préférable de considérer le débit net relatif, c'est-à-dire le rapport du débit net sur le débit brut. Dans ce cas, pour des conditions radio données, ce rapport gardera la même valeur quelle que soit la quantité de ressources radio allouées.

Une deuxième expression possible d'un indicateur de qualité suivant la présente invention est alors la suivante:

$$\frac{R_{net}}{R_0} = \frac{\displaystyle\sum_{i=0}^{NB\_RECEIVED-1} N_i}{\displaystyle\sum_{i=0}^{NB\_SENT-1} N_i^{(c)}}$$

où NB_SENT est le nombre de blocs transmis par ledit émetteur pendant une période donnée, NB_RECEIVED est le nombre de blocs correctement reçus correspondants, $N_i^{(c)}$ est le nombre de bits du i-ème bloc transmis, et $N_i$ est le nombre de bits d'information du i-ème bloc correctement reçu.

Le nombre $N_i^{(c)}$ dépend du schéma de modulation appliqué dans le i-ème bloc transmis. Plus l'efficacité spectrale est élevée, et plus ce nombre est élevé. Les blocs reçus considérés pour calculer le numérateur doivent correspondre aux blocs transmis comptés dans le dénominateur, NB_RECEIVED est donc inférieur ou égal à NB_SENT. $R_{net}/R_0$ est compris entre 0 et 1. Plus ce nombre est élevé, meilleures sont les conditions radio (et donc les performances).

Dans les systèmes comportant plusieurs schémas de modulation possibles, une autre possibilité est de considérer un schéma de modulation donné correspondant à une modulation donnée dite de référence pour le débit brut, c'est-à-dire de remplacer $N_i^{(c)}$ par $N^{(c)}$ qui est le nombre de bits d'un bloc utilisant la modulation de référence (par exemple la modulation GMSK dans le système EGPRS). Dans ce cas, le rapport $R_{net}/R_0$ peut être obtenu au moyen de l'expression suivante:

$$\frac{R_{net}}{R_0} = \frac{\displaystyle\sum_{i=0}^{NB\_RECEIVED-1} N_i}{NB\_SENT * N^{(c)}}$$

où NB_SENT est le nombre de blocs transmis pendant une période donnée, NB_RECEIVED est le nombre de blocs correctement reçus correspondants, $N^{(c)}$ est le nombre de bits d'un bloc transmis avec un schéma de modulation donné correspondant à une modulation dite de référence, et $N_i$ est le nombre de bits d'information du i-ème bloc correctement reçu.

En choisissant comme modulation de référence une modulation de plus faible efficacité spectrale (c'est-à-dire pour laquelle le nombre de bits par symbole transmis est le plus faible), telle que la modulation GMSK dans le système EGPRS, cette dernière expression présente en outre un avantage supplémentaire, qui est qu'elle permet de prendre en compte le fait que les performances sont meilleures quand un bloc est reçu correctement en utilisant une modulation à haute efficacité spectrale que quand un bloc est reçu correctement en utilisant une modulation à faible efficacité spectrale. Par exemple, dans le système EGPRS, deux modulations sont possibles: GMSK (un bit par symbole) et 8PSK (3 bits par symbole). La modulation 8PSK permet d'atteindre environ trois fois le débit permis par la modulation GMSK (mais requiert une puissance d'émission plus élevée et de meilleures conditions radio) et a donc une efficacité spectrale plus élevée (débit de bits plus élevé pour une bande de fréquence donnée). Dans ce cas, pour une valeur de BLER donnée, $R_{net}/R_0$ sera plus grand en utilisant la modulation 8PSK qu'en utilisant la modulation GMSK (environ trois fois plus grand) au lieu d'être inchangé avec l'expression donnée auparavant. Par conséquent, cette nouvelle expression sera plus appropriée quand plusieurs schémas de modulation sont possibles (ce qui est le cas pour le système EGPRS par exemple). On notera qu'avec cette nouvelle expression, le rapport $R_{net}/R_0$ peut être supérieur à 1, car $N_i$ peut alors être supérieur à $N^{(c)}$.

Une liaison radio entre un émetteur 1 et un récepteur 2 dans un système de radiocommunications mobile est illustrée schématiquement sur la figure. Par exemple, l'émetteur peut être dans une station mobile et le récepteur 2 dans le réseau. La liaison est alors une liaison montante (ou "uplink" en anglais). Inversement l'émetteur 1 peut-être dans le réseau et le récepteur 2 dans une station mobile. La liaison est alors une liaison descendante (ou "downlink" en anglais).

L'émetteur 1 comporte, dans l'exemple illustré:

- des moyens 3 de traitement en émission, incluant des fonctions telles que codage, modulation, re-transmission de blocs non correctement reçus (sous la commande de messages ACK/NACK reçus du récepteur 2), ...etc.,
- des moyens 4 d'émission radio-fréquence.

Le récepteur 2 comporte, dans l'exemple illustré:

- des moyens 5 de réception radio-fréquence,
- des moyens 6 de traitement en réception, réalisant des fonctions telles que décodage, démodulation, détection de l'état correct ou non des blocs reçus, transmission à l'émetteur 1 de messages d'acquittement ou de non acquittement (ACK/NACK) correspondants, ...etc.

Sur la figure sont en outre illustrés des moyens 7 d'évaluation de la qualité de la liaison. Dans l'exemple illustré, les moyens 7 sont prévus dans le récepteur, mais suivant un autre exemple ils pourraient être prévus dans l'émetteur. Les moyens 7 permettent de calculer un indicateur de qualité suivant l'invention, tel que par exemple le rapport $R_{net}/R_0$, suivant l'une ou l'autre des expressions possibles, et reçoivent pour cela les paramètres nécessaires à ce calcul. Par exemple, les nombres NB_RECEIVED et Ni sont fournis par les moyens 6 de traitement en réception, et les autres paramètres (tels que T, NB_SENT, $N^{(c)}$ définis précédemment) peuvent avoir des valeurs prédéterminées.

Dans ce qui suit, un exemple d'application de la présente invention est décrit, correspondant plus particulièrement, à titre d'exemple, aux systèmes GPRS et EGPRS. Pour une description de ces systèmes, on pourra se référer par exemple au document "GSM 03.64 Version 8.2.0 Release 1999" publié par l'ETSI.

Dans ces systèmes, quand des informations doivent être transmises de ou vers une station mobile, on alloue à cette station mobile des ressources sous la forme d'un TBF (pour « Temporary Block Flow » en anglais) montant ou descendant, et d'un ou plusieurs PDCHs (pour « Physical Data Channels » en anglais). Un PDCH est un canal physique correspondant à un intervalle de temps par trame (une trame comportant huit intervalles de temps) et à une fréquence ou à un jeu de fréquences dans le cas où la technique de saut de fréquence est utilisée. Plusieurs TBFs peuvent être répartis sur les mêmes PDCHs, ce qui permet de partager un même canal physique entre plusieurs stations mobiles et donc d'optimiser l'utilisation des ressources radio dans le cas de transmission de données en mode paquet.

Le critère radio proposé selon l'invention est alors calculé pour chaque TBF séparément.

Par ailleurs, selon l'architecture en couches de ces systèmes, la couche RLC (pour "Radio Link Control" en anglais) étant responsable de la procédure de re-transmission sur l'interface radio, le critère radio proposé selon l'invention est alors calculé dans cette couche. Les blocs mentionnés dans ce qui précède correspondent alors à des blocs appelés blocs de données RLC (ou "RLC data blocks" en anglais), c'est-à-dire à des blocs RLC transportant des données (des blocs RLC peuvent aussi être utilisés pour transporter des informations de contrôle ou de signalisation).

Dans le système GPRS, un bloc de données RLC est transmis toutes les 20 ms (en moyenne) sur l'interface radio, sur quatre intervalles de temps consécutifs. Dans le système EGPRS, un ou deux blocs de données RLC sont transmis toutes les 20 ms (un bloc de données RLC pour les schémas de codage et de modulation MCS1 à MCS6, et deux blocs de données RLC pour les schémas de codage et de modulation MCS7 à MCS9).

Pendant cette période, le nombre de bits $N^{(c)}$ défini précédemment est égal à 456 dans le système GPRS, et à 464 dans le système EGPRS (pour le cas où la modulation de référence est la modulation GMSK). La séquence de bits transmise en 20 ms sur l'interface radio est appelée bloc radio. Un bloc radio contient donc un ou deux blocs de données RLC, ainsi que, additionnellement, des informations de contrôle. Un bloc radio est obtenu en sortie de la couche RLC/MAC (pour "Radio Link Control/Media Access Control" en anglais) et est appliqué en entrée de la couche physique. Ainsi, sur l'interface radio, des informations de contrôle de la couche physique sont émises additionnellement (telles qu'une séquence d'apprentissage, des informations de contrôle appelées "stealing flags" en anglais, ...etc).

Dans le système GPRS un bloc radio se compose d'un bloc de données RLC, et d'informations de contrôle appelées, en anglais, "MAC header", "RLC header", et "Block Check Sequence" (BCS). Dans le système EGPRS, un bloc radio se compose d'un ou de deux blocs de données RLC, et d'informations de contrôle appelées, en anglais, "MAC header", "RLC header", et "Header Check Sequence" (HCS). Les informations de contrôle appelées "Block Check Sequence" ou BCS sont des bits de contrôle obtenus en appliquant un code détecteur d'erreurs appelé CRC (pour "Cyclic Redundancy Check" en anglais) à chaque bloc de données RLC. Ce code détecteur d'erreurs permet de détecter si un bloc de données RLC est reçu correctement ou non. Dans l'application aux systèmes GPRS et EGPRS, les blocs considérés suivant l'invention sont donc les blocs de données RLC, c'est-à-dire l'ensemble des bits auxquels s'applique le CRC.

On notera que les valeurs données ci-dessus pour le nombre $N^{(c)}$ ne correspondent pas exactement au nombre de bits (ou bits codés) considérés précédemment, c'est-à-dire n'incluent pas seulement les données, mais aussi les informations de contrôle telles que "MAC header", "RLC header", ...etc. Cependant, il est à remarquer que le débit $R_0$ est seulement un débit de référence et pourrait donc être calculé différemment (par exemple en excluant les informations de contrôle "MAC header" et "RLC header" ...), mais dans ce cas, il pourrait varier en fonction du bloc, ce qui rendrait l'expression plus complexe.

Le nombre de bits d'information qui peut être transmis dans un bloc de données RLC dépend du schéma de codage utilisé, et aussi de la modulation utilisée dans le cas du système EGPRS.

Pour prendre en compte le fait qu'un ou deux blocs de données RLC peuvent être transmis dans un bloc radio, le critère radio donné précédemment peut être légèrement modifié, de la façon suivante:

$$\frac{R_{net}}{R_0} = \frac{\sum_{i=0}^{NB\_RECEIVED-1} \frac{N_i}{n_i}}{\sum_{i=0}^{NB\_SENT-1} \frac{N^{(c)}}{n_i}},$$

où NB_SENT est le nombre de blocs de données RLC (appelés aussi plus simplement ici blocs de données) transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis).

On notera que $n_i$ peut être différent de $n'_i$ dans le cas où le schéma de modulation change pendant la période considérée pour le calcul de $R_{net}/R_0$ et où certains blocs de données ne sont pas reçus correctement.

De façon équivalente, cette expression peut être écrite:

$$\frac{R_{net}}{R_0} = \frac{\sum_{i=0}^{NB\_RECEIVED-1} \frac{\rho_i}{n_i}}{\sum_{i=0}^{NB\_SENT-1} \frac{1}{n_i}},$$

avec $\rho_i = N_i / N^{(c)}$.

Par exemple:

- pour le système GPRS, $\rho_i$ est compris entre 0 et 1, et pour le système EGPRS, $\rho_i$ est compris entre 0 et 3 (la valeur 3 correspondant au fait qu'il y a trois bits d'information par symbole avec la modulation 8PSK),
- pour le système GPRS, $n_i$ est toujours égal à 1, et pour le système EGPRS $n_i$ est égal à 1 pour les schémas de codage et de modulation MCS1 à MCS6, et $n_i$ est égal à 2 pour les schémas de codage et de modulation MCS7 à MCS9.

Une autre expression de $R_{net}/R_0$ pourrait être la suivante:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i}},$$

où NB_SENT est le nombre de blocs de données transmis pendant une période donnée, NB_RECEIVED est le nombre de blocs de données correctement reçus correspondants, $N_i^{(c)}$ est le nombre de bits dans le bloc radio comportant le i-ème bloc de données transmis, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis).

Dans des systèmes tels que par exemple les systèmes GPRS et EGPRS, l'état correct ou non des blocs reçus, nécessaire à l'évaluation de qualité suivant l'une ou l'autre des expressions précédentes, peut être obtenu de la manière suivante.

Si l'évaluation de qualité est effectuée dans le réseau:

- dans le sens de transmission descendant (c'est-à-dire du réseau vers la station mobile), le réseau sait quels blocs il transmet, et il sait par ailleurs quels blocs sont reçus correctement ou incorrectement grâce aux messages "Packet downlink ACK/NACK" émis régulièrement par la station mobile vers le réseau,

- dans le sens de transmission montant (c'est-à-dire de la station mobile vers le réseau) le réseau est capable de savoir si les blocs sont reçus correctement ou non en utilisant un code CRC comme rappelé plus haut. De plus on sait que les numéros de blocs émis se suivent, donc lorsque les deux derniers blocs correctement reçus sont par exemple les blocs 8 et 11, on sait que les blocs 9 et 10 ont été émis et n'ont pas été reçus correctement.

Si l'évaluation de qualité est effectuée dans la station mobile, les principes peuvent être les mêmes que ceux indiqués ci-dessus, les messages "Packet downlink ACK/NACK" étant alors remplacés par les messages "Packet uplink ACK/NACK" émis régulièrement par le réseau vers la station mobile.

En outre, dans le cas où l'évaluation de qualité est effectuée dans le réseau, cette évaluation de qualité peut être effectuée dans l'une ou l'autre des entités constitutives d'un tel réseau (appelées ici aussi entités de réseau de radiocommunications mobiles), telles que:

- des stations de base, pouvant être appelées, suivant les systèmes, BTS (pour "Base Transceiver Station" en anglais), ou Node B par exemple,
- des contrôleurs de stations de base, pouvant être appelés, suivant les systèmes, BSC (pour "Base Station Controller" en anglais), ou RNC (pour "Radio Network Controller" en anglais) par exemple,
- des centres de commutation mobile, pouvant par exemple être appelés MSC (pour "Mobile Switching Center" en anglais).

Par exemple, cette évaluation de qualité peut être effectuée dans les contrôleurs de stations de base. Plus particulièrement, dans le cas des systèmes GPRS et EGPRS, cette évaluation de qualité peut être effectuée dans une entité fonctionnelle appelée PCU (pour "Packet Control Unit" en anglais) permettant de supporter les services de données en mode paquet. Cette entité est notamment en charge de la couche RLC , et donc de fonctions telles que les re-transmissions de blocs, ...etc.

Dans l'exemple d'application considéré aux systèmes GPRS et EGPRS, l'indicateur de qualité suivant l'invention peut par exemple être utilisé dans deux buts :

• Relâchement du TBF(c'est-à-dire arrêt de la transmission) quand $R_{net}/R_0$ est en dessous d'un seuil configurable

• Activation de la re-sélection de cellule quand $R_{net}/R_0$ est en dessous d'un seuil configurable qui est plus grand que le seuil utilisé pour le relâchement du TBF. En effet, si les conditions radio sont très mauvaises, il est préférable de chercher d'abord une meilleure cellule avant de relâcher le TBF.

Cependant l'indicateur de qualité suivant l'invention pourrait aussi être utilisé dans d'autres buts tels que l'adaptation de lien par exemple.

En outre, le critère radio suivant l'invention a été principalement décrit dans le cas où la technique de re-transmission est utilisée. Le critère radio constitué par le BLER peut être utilisé dans le cas contraire. Cependant le critère radio suivant l'invention pourrait aussi être utilisé dans ce dernier cas.

## Revendications

1. Procédé pour évaluer la qualité d'une liaison radio dans un système de radiocommunications mobiles dans lequel les données transmises sur ladite liaison sont obtenues par codage de blocs de bits d'information, ce procédé étant **caractérisé en ce que** ladite qualité est évaluée à partir du débit net ($R_{net}$) transmis sur ladite liaison, et **en ce que** ladite qualité est évaluée à partir du débit net relatif, c'est-à-dire du rapport ($R_{net}/R_0$) entre le débit net ($R_{net}$) et le débit brut ($R_0$), le débit brut étant fonction du nombre de blocs transmis pendant une période donnée, et le débit net étant fonction du nombre de blocs correctement reçus correspondants.

2. Procédé selon la revendication 1, **caractérisé en ce que** le rapport entre le débit net et le débit brut est obtenu en calculant:

$$\frac{R_{net}}{R_0} = \frac{\sum_{i=0}^{NB\_RECEIVED-1} N_i}{\sum_{i=0}^{NB\_SENT-1} N_i^{(c)}}$$

où NB_SENT est le nombre de blocs transmis pendant une période donnée, NB_RECEIVED est le nombre de blocs correctement reçus correspondants, $N_i^{(c)}$ est le nombre de bits du i-ème bloc transmis, et $N_i$ est le nombre de bits d'information du i-ème bloc correctement reçu.

3. Procédé selon l'une des revendications 1 et 2, **caractérisé en ce que** le nombre de bits des blocs transmis étant fonction du schéma de modulation utilisé, le débit brut est déterminé pour un schéma de modulation donné correspondant à une modulation dite de référence, quel que soit le schéma de modulation utilisé.

4. Procédé selon la revendication 3, **caractérisé en ce que** le rapport entre le débit net et le débit brut est obtenu en calculant:

$$\frac{R_{net}}{R_0} = \frac{\displaystyle\sum_{i=0}^{NB\_RECEIVED-1} N_i}{NB\_SENT * N^{(c)}}$$

où NB_SENT est le nombre de blocs transmis pendant une période donnée, NB_RECEIVED est le nombre de blocs correctement reçus correspondants, $N^{(c)}$ est le nombre de bits d'un bloc transmis avec un schéma de modulation donné correspondant à une modulation dite de référence, et $N_i$ est le nombre de bits d'information du i-ème bloc correctement reçu.

**5.** Procédé selon l'une des revendications 3 et 4, **caractérisé en ce que** ladite modulation de référence est une modulation de plus faible efficacité spectrale.

**6.** Procédé selon la revendication 1, **caractérisé en ce que**, les blocs transmis, ou blocs radio, pouvant comporter un ou plusieurs blocs, ou blocs de données, suivant le schéma de modulation utilisé, le rapport entre le débit net et le débit brut est obtenu en calculant:

$$\frac{R_{net}}{R_0} = \frac{\displaystyle\sum_{i=0}^{NB\_RECEIVED-1} \frac{N_i}{n_i}}{\displaystyle\sum_{i=0}^{NB\_SENT-1} \frac{N_i^{(c)}}{n_i'}}$$

où NB_SENT est le nombre de blocs de données transmis pendant une période donnée, NB_RECEIVED est le nombre de blocs de données correctement reçus correspondants, $N_i^{(c)}$ est le nombre de bits dans le bloc radio comportant le i-ème bloc de données transmis, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis).

**7.** Procédé selon la revendication 1, **caractérisé en ce que**, les blocs transmis, ou blocs radio, pouvant comporter un ou plusieurs blocs, ou blocs de données, suivant le schéma de modulation utilisé, le rapport entre le débit net et le débit brut est obtenu en calculant :

$$\frac{R_{net}}{R_0} = \frac{\displaystyle\sum_{i=0}^{NB\_RECEIVED-1} \frac{N_i}{n_i}}{\displaystyle\sum_{i=0}^{NB\_SENT-1} \frac{N^{(c)}}{n_i'}}$$

où NB_SENT est le nombre de blocs de données transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis).

**8.** Procédé selon la revendication 1, **caractérisé en ce que** les blocs transmis, ou blocs radio, pouvant comporter un ou plusieurs blocs, ou blocs de données, suivant le schéma de modulation utilisé, le rapport entre le débit net et le débit brut est obtenu en calculant :

$$\frac{R_{net}}{R_0} = \frac{\displaystyle\sum_{i=0}^{NB\_RECEIVED-1} \frac{\rho_i}{n_i}}{\displaystyle\sum_{i=0}^{NB\_SENT-1} \frac{1}{n_i'}}$$

où NB_SENT est le nombre de blocs de données transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, ni (respectivement n'i) est égal au nombre de blocs de données dans le bloc radio contenant le i-ème bloc de données reçu (respectivement transmis), et $\rho_i$ est égal à $N_i/N^{(c)}$.

**9.** Entité de réseau de radiocommunications mobiles, pour système de radiocommunications mobiles dans lequel les données transmises sur une liaison radio sont obtenues par codage de blocs de bits d'information, **caractérisée en ce qu'**elle comporte des moyens (7) pour évaluer la qualité de ladite liaison radio, à partir du débit net $R_{net}$ transmis sur ladite liaison, ladite qualité étant évaluée à partir du débit net relatif, c'est-à-dire du rapport $R_{net}/R_0$ entre le débit net et $R_{net}$ le débit brut $R_0$, le débit brut étant fonction du nombre de blocs transmis pendant une période donnée, et le débit net étant fonction du nombre de blocs correctement reçus correspondants.

10. Entité selon la revendication 9, **caractérisée en ce qu'**elle comporte des moyens pour obtenir le rapport entre le débit net et le débit brut en calculant:

$$\frac{R_{net}}{R_0} = \frac{\sum_{i=0}^{NB\_RECEIVED-1} N_i}{\sum_{i=0}^{NB\_SENT-1} N_i^{(c)}}$$

où NB_SENT est le nombre de blocs transmis pendant une période donnée, NB_RECEIVED est le nombre de blocs correctement reçus correspondants, $N_i^{(c)}$ est le nombre de bits du i-ème bloc transmis, et $N_i$ est le nombre de bits d'information du i-ème bloc correctement reçu.

11. Entité selon l'une des revendications 9 et 10, **caractérisée en ce que** le nombre de bits des blocs transmis étant fonction du schéma de modulation utilisé, le débit brut est déterminé pour un schéma de modulation donné correspondant à une modulation dite de référence, quel que soit le schéma de modulation utilisé.

12. Entité selon la revendication 1, **caractérisée en ce qu'**elle comporte des moyens pour obtenir le rapport entre le débit net et le débit brut en calculant:

$$\frac{R_{net}}{R_0} = \frac{\sum_{i=0}^{NB\_RECEIVED-1} N_i}{NB\_SENT * N^{(c)}}$$

où NB_SENT est le nombre de blocs transmis pendant une période donnée, NB_RECEIVED est le nombre de blocs correctement reçus correspondants, $N^{(c)}$ est le nombre de bits d'un bloc transmis avec un schéma de modulation donné correspondant à une modulation dite de référence, et $N_i$ est le nombre de bits d'information du i-ème bloc correctement reçu.

13. Entité selon l'une des revendications 9 et 10, **caractérisée en ce que** ladite modulation de référence est une modulation de plus faible efficacité spectrale.

14. Entité selon la revendication 9, **caractérisée en ce que**, les blocs transmis, ou blocs radio, pouvant comporter un ou plusieurs blocs, ou blocs de données, suivant le schéma de modulation utilisé, elle comporte des moyens pour obtenir le rapport entre le débit net et le débit brut en calculant :

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

où NB_SENT est le nombre de blocs de données transmis pendant une période donnée, NB_RECEIVED est le nombre de blocs de données correctement reçus correspondants, $N_i^{(c)}$ est le nombre de bits dans le bloc radio comportant le i-ème bloc de données transmis, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis) .

15. Entité selon la revendication 9, **caractérisée en ce que**, les blocs transmis, ou blocs radio, pouvant comporter un ou plusieurs blocs, ou blocs de données, suivant le schéma de modulation utilisé, elle comporte des moyens pour obtenir le rapport entre le débit net et le débit brut en calculant :

$$\frac{R_{net}}{R_0} = \frac{\sum_{i=0}^{NB\_RECEIVED-1} \frac{N_i}{n_i}}{\sum_{i=0}^{NB\_SENT-1} \frac{N^{(c)}}{n_i'}}$$

où NB_SENT est le nombre de blocs de données transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis) .

16. Entité selon la revendication 9, **caractérisé en ce que** les blocs transmis, ou blocs radio, pouvant comporter un ou plusieurs blocs, ou blocs de données, suivant le schéma de modulation utilisé, elle comporte des moyens pour obtenir le rapport entre le débit net et le débit brut est obtenu en calculant :

$$\frac{R_{net}}{R_0} = \frac{\displaystyle\sum_{i=0}^{NB\_RECEIVED-1} \frac{\rho_i}{n_i}}{\displaystyle\sum_{i=0}^{NB\_SENT-1} \frac{1}{n_i{}'}}$$

où NB_SENT est le nombre de blocs de données transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, ni (respectivement n'i) est égal au nombre de blocs de données dans le bloc radio contenant le i-ème bloc de données reçu (respectivement transmis) , et $\rho_i$ est égal à $N_i / N^{(c)}$ .

17. Station mobile, pour système de radiocommunications mobiles dans lequel les données transmises sur une liaison radio sont obtenues par codage de blocs de bits d'information, **caractérisée en ce qu'**elle comporte des moyens (7) pour évaluer la qualité d'une liaison radio à partir du débit net $R_{net}$ transmis sur ladite liaison ladite qualité étant évaluée à partir du débit net relatif, c'est-à-dire du rapport $R_{net}/R_0$ entre le débit net $R_{net}$ et le débit brut $R_0$, le débit brut étant fonction du nombre de blocs transmis pendant une période donnée, et le débit net étant fonction du nombre de blocs correctement reçus correspondants.

18. Station mobile selon la revendication 17, **caractérisée en ce qu'**elle comporte des moyens pour obtenir le rapport entre le débit net et le débit brut en calculant:

$$\frac{R_{net}}{R_0} = \frac{\displaystyle\sum_{i=0}^{NB\_RECEIVED-1} N_i}{\displaystyle\sum_{i=0}^{NB\_SENT-1} N_i^{(c)}}$$

où NB_SENT est le nombre de blocs transmis pendant une période donnée, NB_RECEIVED est le nombre de blocs correctement reçus correspondants, $N_i^{(c)}$ est le nombre de bits du i-ème bloc transmis, et $N_i$ est le nombre de bits d'information du i-ème bloc correctement reçu.

19. Station mobile selon l'une des revendications 17 et 18, **caractérisée en ce que** le nombre de bits des blocs transmis étant fonction du schéma de modulation utilisé, le débit brut est déterminé pour un schéma de modulation donné correspondant à une modulation dite de référence, quel que soit le schéma de modulation utilisé.

20. Station mobile selon la revendication 17, **caractérisée en ce qu'**elle comporte des moyens pour obtenir le rapport entre le débit net et le débit brut en calculant:

$$\frac{R_{net}}{R_0} = \frac{\displaystyle\sum_{i=0}^{NB\_RECEIVED-1} N_i}{NB\_SENT * N^{(c)}}$$

où NB_SENT est le nombre de blocs transmis pendant une période donnée, NB_RECEIVED est le nombre de blocs correctement reçus correspondants, $N^{(c)}$ est le nombre de bits d'un bloc transmis avec un schéma de modulation donné correspondant à une modulation dite de référence, et $N_i$ est le nombre de bits d'information du i-ème bloc correctement reçu.

21. Station mobile selon l'une des revendications 17 et 18, **caractérisée en ce que** ladite modulation de référence est une modulation de plus faible efficacité spectrale.

22. Station mobile selon la revendication 17, **caractérisée en ce que**, les blocs transmis, ou blocs radio, pouvant comporter un ou plusieurs blocs, ou blocs de données, suivant le schéma de modulation utilisé, elle comporte des moyens pour obtenir le rapport entre le débit net et le débit brut en calculant :

$$\frac{R_{net}}{R_0} = \frac{\displaystyle\sum_{i=0}^{NB\_RECEIVED-1} \frac{N_i}{n_i}}{\displaystyle\sum_{i=0}^{NB\_SENT-1} \frac{N_i^{(c)}}{n_i{}'}}$$

où NB_SENT est le nombre de blocs de données transmis pendant une période donnée, NB_RECEIVED est le nombre de blocs de données correctement reçus correspondants, $N_i^{(c)}$ est le nombre de bits dans le bloc radio comportant le i-ème bloc de données transmis, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis) .

**23.** Station mobile selon la revendication 17, **caractérisée en ce que**, les blocs transmis, ou blocs radio, pouvant comporter un ou plusieurs blocs, ou blocs de données, suivant le schéma de modulation utilisé, elle comporte des moyens pour obtenir le rapport entre le débit net et le débit brut en calculant :

$$\frac{R_{net}}{R_0} = \frac{\sum_{i=0}^{NB\_RECEIVED-1} \frac{N_i}{n_i}}{\sum_{i=0}^{NB\_SENT-1} \frac{N^{(c)}}{n_i{'}}}$$

où NB_SENT est le nombre de blocs de données transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, et ni (respectivement n'i) est égal au nombre de blocs de données dans le bloc radio contenant le i-ème bloc de données reçu (respectivement transmis) .

**24.** Station mobile selon la revendication 17, **caractérisé en ce que** les blocs transmis, ou blocs radio, pouvant comporter un ou plusieurs blocs, ou blocs de données,
suivant le schéma de modulation utilisé, elle comporte des moyens pour obtenir le rapport entre le débit net et le débit brut est obtenu en calculant :

$$\frac{R_{net}}{R_0} = \frac{\sum_{i=0}^{NB\_RECEIVED-1} \frac{\rho_i}{n_i}}{\sum_{i=0}^{NB\_SENT-1} \frac{1}{n_i{'}}}$$

où NB_SENT est le nombre de blocs de données transmis pendant une période donnée, NB_RECEIVED est le nombre de blocs de données correctement reçus correspondants, $N^{(c)}$ est le nombre de bits d'un bloc radio pour un schéma de modulation donné correspondant à une modulation de référence, $N_i$ est le nombre de bits d'information dans le bloc radio comportant le i-ème bloc de données reçu, ni (respectivement n'i) est égal au nombre de blocs de données dans le bloc radio contenant le i-ème bloc de données reçu (respectivement transmis) , et $\rho_i$ est égal à $N_i / N^{(c)}$.

**Claims**

**1.** A method for assessing the quality of a radio link in a mobile radio communications system, in which the data sent on said link is obtained by encoding blocks of information bits, which method is **characterized in that** said quality is assessed based on the net bitrate $R_{net}$ on said link, and **in that** said quality is assessed based on the relative net bitrate, meaning the ratio $R_{net}/R_0$ between the net bitrate $R_{net}$ and the gross bitrate $R_0$, the gross bitrate being a function of the number of blocks sent in a given period, and the net bitrate being a function of the number of corresponding correctly received blocks.

**2.** A method according to claim 1, **characterized in that** the ratio between the net bitrate and the gross bitrate is obtained by calculating:

$$\frac{R_{net}}{R_0} = \frac{\sum_{i=0}^{NB\_RECEIVED-1} N_i}{\sum_{i=0}^{NB\_SENT-1} N_i^{(c)}}$$

where NB_SENT is the number of blocks sent during a given period, NB_RECEIVED is the number of corresponding correctly received blocks, $N_i^{(c)}$ is the number of bits in the i-th block sent, and $N_i$ is the number of information bits in the i-th correctly received block.

**3.** A method according to one of the claims 1 and 2, **characterized in that** number of bits in the sent blocks being a function of the modulation scheme used, the gross bitrate is determined for a given modulation scheme corresponding to a so-called reference modulation, regardless of the modulation scheme used.

**4.** A method according to claim 3, **characterized in that** the ratio between the net bitrate and the gross bitrate is obtained by calculating:

$$\frac{R_{net}}{R_0} = \frac{\sum_{i=0}^{NB\_RECEIVED-1} N_i}{NB\_SENT * N^{(c)}}$$

where NB_SENT is the number of blocks sent in a given period, NB_RECEIVED is the number of corresponding correctly received blocks, $N^{(c)}$ is the number of bits in a block sent with a given modulation scheme corresponding to a so-called reference modulation, and $N_i$ is the number of information bits in the i-th correctly received block.

5. A method according to one of the claims 3 and 4, **characterized in that** said reference modulation is a modulation with lower spectral efficiency.

6. A method according to claim 1, **characterized in that**, since the sent blocks, or radio blocks, potentially comprise one or more blocks, or data blocks, depending on the modulation scheme used, the ratio between the net bitrate and the gross bitrate is obtained by calculating:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

where NB_SENT is the number of blocks sent during a given period, NB_RECEIVED is the number of corresponding correctly received blocks, $N_i^{(c)}$ is the number of bits in the radio block that comprises the i-th block sent, $N_i$ is the number of information bits in the radio block that comprises the i-th data block received, and ni (and respectively n'i) is equal to the number of data blocks in the radio block containing the i-th data block received (and respectively sent).

7. A method according to claim 1, **characterized in that**, since the sent blocks, or radio blocks, potentially comprise one or more blocks, or data blocks, depending on the modulation scheme used, the ratio between the net bitrate and the gross bitrate is obtained by calculating:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

where NB_SENT is the number of blocks sent in a given period, NB_RECEIVED is the number of corresponding correctly received blocks, $N^{(c)}$ is the number of bits in a radio block for a given modulation scheme corresponding to a reference modulation, $N_i$ is the number of information bits in the radio block that comprises the i-th data block received, and ni (and respectively n'i) is equal to the number of data blocks in the radio block containing the i-th data block received (and respectively sent).

8. A method according to claim 1, **characterized in that**, since the sent blocks, or radio blocks, potentially comprise one or more blocks, or data blocks, depending on the modulation scheme used, the ratio between the net bitrate and the gross bitrate is obtained by calculating:

$$\frac{R_{net}}{R_0} = \frac{\sum_{i=0}^{NB\_RECEIVED-1} \frac{p_i}{n_i}}{\sum_{i=0}^{NB\_SENT-1} \frac{1}{n_i'}}$$

where NB_SENT is the number of blocks sent in a given period, NB_RECEIVED is the number of corresponding correctly received blocks, $N^{(c)}$ is the number of bits in a radio block for a given modulation scheme corresponding to a reference modulation, $N_i$ is the number of information bits in the radio block that comprises the i-th data block received, and ni (and respectively n'i) is equal to the number of data blocks in the radio block containing the i-th data block received (and respectively sent), and pi is equal to $N_i/N^{(c)}$.

9. A mobile radio communication network entity, for a mobile radio communications system in which the data sent on a link is obtained by encoding blocks of information bits, **characterized in that** it comprises means (7) for assessing the quality of said radio link, based on the net bitrate $R_{net}$ sent on said link, said quality being assessed based on the relative net bitrate, meaning the ratio $R_{net}/R_0$ between the net bitrate $R_{net}$ and the gross bitrate $R_0$, the gross bitrate being a function of the number of blocks sent in a given period, and the net bitrate being a function of the number of corresponding correctly received blocks.

10. An entity according to claim 9, **characterized in that** it comprises means for obtaining the ratio between the net bitrate and the gross bitrate by calculating:

$$\frac{R_{net}}{R_0} = \frac{\sum_{i=0}^{NB\_RECEIVED-1} N_i}{\sum_{i=0}^{NB\_SENT-1} N_i^{(c)}}$$

where NB_SENT is the number of blocks sent in a given period, NB_RECEIVED is the number of corresponding correctly received blocks, $N^{(c)}$ is the number of bits in the i-th bit sent, and $N_i$ is the number of information bits in the i-th correctly received block.

11. An entity according to any one of the claims 9 and 10, **characterized in that** the number of blocks sent being a function of the modulation scheme used, the gross bitrate is determined for a given modulation scheme corresponding to a so-called reference modulation, regardless of the modulation scheme used.

12. An entity according to claim 1, **characterized in that** it comprises means for obtaining the ratio between the net bitrate and the gross bitrate by calculating:

$$\frac{R_{net}}{R_0} = \frac{\sum_{i=0}^{NB\_RECEIVED-1} N_i}{NB\_SENT * N^{(c)}}$$

where NB_SENT is the number of blocks sent in a given period, NB_RECEIVED is the number of corresponding correctly received blocks, $N^{(c)}$ is the number of bits in a block sent with a given modulation scheme corresponding to a reference modulation, and $N_i$ is the number of information bits in the i-th correctly received block.

13. An entity according to any one of the claims 9 and 10, **characterized in that** said reference modulation is a modulation with lower spectral efficiency.

14. An entity according to claim 9, **characterized in that**, since the sent blocks, or radio blocks, potentially comprise one or more blocks, or data blocks, depending on the modulation scheme used, it comprises means for obtaining the ratio between the net bitrate and the gross bitrate by calculating:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

where NB_SENT is the number of data blocks sent during a given period, NB_RECEIVED is the number of corresponding data blocks correctly received, $N_i^{(c)}$ is the number of bits in the radio block that comprises the i-th data block sent, $N_i$ is the number of information bits in the radio block that comprises the i-th data block received, and ni (and respectively n'i) is equal to the number of data blocks in the radio block containing the i-th data block received (and respectively sent).

15. An entity according to claim 9, **characterized in that**, since the sent blocks, or radio blocks, potentially comprise one or more blocks, or data blocks, depending on the modulation scheme used, it comprises means for obtaining the ratio between the net bitrate and the gross bitrate by calculating:

$$\frac{R_{net}}{R_0} = \frac{\sum_{i=0}^{NB\_RECEIVED-1} \frac{N_i}{n_i}}{\sum_{i=0}^{NB\_SENT-1} \frac{N^{(c)}}{n_i'}}$$

where NB_SENT is the number of data blocks sent in a given period, NB_RECEIVED is the number of corresponding correctly received blocks, $N^{(c)}$ is the number of bits in a block sent with a given modulation scheme corresponding to a reference modulation, $N_i$ is the number of information bits in the radio block comprising the i-th correctly received block, and ni (and respectively n'i) is equal to the number of data blocks in the radio block containing the i-th data block received (and respectively sent).

16. An entity according to claim 9, **characterized in that**, since the sent blocks, or radio blocks, potentially comprise one or more blocks, or data blocks, depending on the modulation scheme used, it comprises means for obtaining the ratio between the net bitrate and the gross bitrate by calculating:

$$\frac{R_{net}}{R_0} = \frac{\sum_{i=0}^{NB\_RECEIVED-1} \frac{p_i}{n_i}}{\sum_{i=0}^{NB\_SENT-1} \frac{1}{n_i'}}$$

where NB_SENT is the number of data blocks sent in a given period, NB_RECEIVED is the number of corresponding correctly received blocks, $N^{(c)}$ is the number of bits in a radio block for a given modulation scheme corresponding to a reference modulation, $N_i$ is the number of information bits in the radio block comprising the i-th correctly received block, ni (and respectively n'i) is equal to the number of data blocks in the radio block containing the i-th data block received (and respectively sent, and pi is equal to $N_i$ / $N^{(c)}$.

17. A mobile station for a mobile radio communications system in which the data sent on a radio link is obtained by encoding blocks of information bits, **characterized in that** it comprises means (7) for assessing the quality of a radio link, based on the net bitrate $R_{net}$ sent on said link, said quality being assessed based on the relative net bitrate, meaning the ratio $R_{net}/R_0$ between the net bitrate $R_{net}$ and the gross bitrate $R_0$, the gross bitrate being a function of the number of blocks sent in a given period, and the net bitrate being a function of the number of corresponding correctly received blocks.

18. A mobile station according to claim 17, **character-**

**ized in that** it comprises means for obtaining the ratio between the net bitrate and the gross bitrate by calculating:

$$\frac{R_{net}}{R_0} = \frac{\sum_{i=0}^{NB\_RECEIVED-1} N_i}{\sum_{i=0}^{NB\_SENT-1} N_i^{(c)}}$$

where NB_SENT is the number of blocks sent in a given period, NB_RECEIVED is the number of corresponding correctly received blocks, $N_i^{(c)}$ is the number of bits in the i-th bit sent, and $N_i$ is the number of information bits in the i-th correctly received block.

19. A mobile station according to any one of the claims 17 and 18, **characterized in that** the number of blocks sent being a function of the modulation scheme used, the gross bitrate is determined for a given modulation scheme corresponding to a so-called reference modulation, regardless of the modulation scheme used.

20. A mobile station according to claim 17, **characterized in that** it comprises means for obtaining the ratio between the net bitrate and the gross bitrate by calculating:

$$\frac{R_{net}}{R_0} = \frac{\sum_{i=0}^{NB\_RECEIVED-1} N_i}{NB\_SENT * N^{(c)}}$$

where NB_SENT is the number of blocks sent in a given period, NB_RECEIVED is the number of corresponding correctly received blocks, $N^{(c)}$ is the number of bits in a block sent with a given modulation scheme corresponding to a reference modulation, and $N_i$ is the number of information bits in the i-th correctly received block.

21. A mobile station according to any one of the claims 17 and 18, **characterized in that** said reference modulation is a modulation with lower spectral efficiency.

22. A mobile station according to claim 17, **characterized in that**, since the sent blocks, or radio blocks, potentially comprise one or more blocks, or data blocks, depending on the modulation scheme used, it comprises means for obtaining the ratio between the net bitrate and the gross bitrate by calculating:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i^{'}}}$$

where NB_SENT is the number of data blocks sent during a given period, NB_RECEIVED is the number of corresponding data blocks correctly received, $N_i^{(c)}$ is the number of bits in the radio block that comprises the i-th data block sent, $N_i$ is the number of information bits in the radio block that comprises the i-th data block received, and ni (and respectively n'i) is equal to the number of data blocks in the radio block containing the i-th data block received (and respectively sent).

23. A mobile station according to claim 17, **characterized in that**, since the sent blocks, or radio blocks, potentially comprise one or more blocks, or data blocks, depending on the modulation scheme used, it comprises means for obtaining the ratio between the net bitrate and the gross bitrate by calculating:

$$\frac{R_{net}}{R_0} = \frac{\sum_{i=0}^{NB\_RECEIVED-1} \frac{N_i}{n_i}}{\sum_{i=0}^{NB\_SENT-1} \frac{N^{(c)}}{n_i^{'}}}$$

where NB_SENT is the number of data blocks sent in a given period, NB_RECEIVED is the number of corresponding data blocks correctly received, $N^{(c)}$ is the number of bits in a radio block for a given modulation scheme corresponding to a reference modulation, $N_i$ is the number of information bits in the radio block comprising the i-th data block received, and ni (and respectively n'i) is equal to the number of data blocks in the radio block containing the i-th data block received (and respectively sent).

24. A mobile station according to claim 17, **characterized in that**, since the sent blocks, or radio blocks, potentially comprise one or more blocks, or data blocks, depending on the modulation scheme used, it comprises means for obtaining the ratio between the net bitrate and the gross bitrate by calculating

$$\frac{R_{net}}{R_0} = \frac{\sum_{i=0}^{NB\_RECEIVED-1} \frac{\rho_i}{n_i}}{\sum_{i=0}^{NB\_SENT-1} \frac{1}{n_i^{'}}}$$

where NB_SENT is the number of data blocks sent in a given period, NB_RECEIVED is the number of corresponding data blocks correctly received, $N^{(c)}$ is the number of bits in a radio block for a given modulation scheme corresponding to a reference modulation, $N_i$ is the number of information bits in the radio block comprising the i-th data block received, and ni (and respectively n'i) is equal to the number of data blocks in the radio block containing the i-th data block received (and respectively sent) and pi is equal to $N_i / N^{(c)}$.

**Patentansprüche**

1. Verfahren zur Bewertung der Qualität einer Funkverbindung in einem Mobilfunkkommunikationssystem, wobei die auf der besagten Verbindung übertragenen Daten durch das Codieren von Blöcken von Informationsbits erhalten werden, wobei dieses Verfahren **dadurch gekennzeichnet ist, dass** die besagte Qualität ausgehend von der auf der besagten Verbindung übertragenen Nettodatenrate $R_{net}$ bewertet wird, und dass die besagte Qualität ausgehend von der relativen Nettodatenrate, d. h. dem Verhältnis $R_{net}/R_0$ zwischen der Nettodatenrate $R_{net}$ und der Bruttodatenrate $R_0$, bewertet wird, wobei die Bruttodatenrate von der Anzahl der innerhalb einer gegebenen Zeitspanne übertragenen Blöcke abhängt und die Nettodatenrate von der Anzahl der entsprechenden korrekt empfangenen Blöcke abhängt.

2. Verfahren nach Anspruch 1, **dadurch gekennzeichnet, dass** das Verhältnis zwischen der Nettodatenrate und der Bruttodatenrate gemäß der folgenden Berechnung erhalten wird:

$$\frac{R_{net}}{R_0} = \frac{\sum_{i=0}^{NB\_RECEIVED-1} N_i}{\sum_{i=0}^{NB\_SENT-1} N_i^{(c)}}$$

wobei NB_SENT die Anzahl der während einer gegebenen Zeitspanne übertragenen Blöcke darstellt, NB_RECEIVED die Anzahl der entsprechenden korrekt empfangenen Blöcke darstellt, $N_i^{(c)}$ die Anzahl der Bits des i-ten übertragenen Blocks darstellt und $N_i$ die Anzahl der Informationsbits des i-ten korrekt empfangenen Blocks darstellt.

3. Verfahren nach einem der Ansprüche 1 und 2, **dadurch gekennzeichnet, dass** die Anzahl der Bits der übertragenen Blöcke von dem verwendeten Modulationsschema abhängt, wobei die Bruttodatenrate für ein gegebenes, einer sogenannten Referenzmodulation entsprechendes Modulationsschema bestimmt wird, ungeachtet des verwendeten Modulationsschemas.

4. Verfahren nach Anspruch 3, **dadurch gekennzeichnet, dass** das Verhältnis zwischen der Nettodatenrate und der Bruttodatenrate gemäß der folgenden Berechnung erhalten wird:

$$\frac{R_{net}}{R_0} = \frac{\sum_{i=0}^{NB\_RECEIVED-1} N_i}{NB\_SENT * N^{(c)}}$$

wobei NB_SENT die Anzahl der während einer gegebenen Zeitspanne übertragenen Blöcke darstellt, NB_RECEIVED die Anzahl der entsprechenden korrekt empfangenen Blöcke darstellt, $N_i^{(c)}$ die Anzahl der Bits eines mit einem gegebenen, einer sogenannten Referenzmodulation entsprechenden Modulationsschema übertragenen Blocks darstellt und $N_i$ die Anzahl der Informationsbits des i-ten korrekt empfangenen Blocks darstellt.

5. Verfahren nach einem der Ansprüche 3 et 4, **dadurch gekennzeichnet, dass** die besagte Referenzmodulation eine Modulation mit einer niedrigeren Spektraleffizienz ist.

6. Verfahren nach Anspruch 1, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei das Verhältnis zwischen der Nettodatenrate und der Bruttodatenrate gemäß der folgenden Berechnung erhalten wird:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N_i^{(c)}$ die Anzahl der Bits in dem Funkblock, welcher den i-ten übertragenen Datenblock enthält, darstellt, $N_i$ die Anzahl der Informationsbits in dem Funkblock, welcher den i-ten empfangenen Datenblock enthält, darstellt, und ni bzw. n'i der Anzahl der Datenblöcke in dem Funkblock, welcher den i-ten empfangenen bzw. übertragenen Datenblock enthält,, entspricht.

**7.** Verfahren nach Anspruch 1, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei das Verhältnis zwischen der Nettodatenrate und der Bruttodatenrate gemäß der folgenden Berechnung erhalten wird:

$$\frac{R_{net}}{R_0} = \frac{\sum_{i=0}^{NB\_RECEIVED-1} \frac{N_i}{n_i}}{\sum_{i=0}^{NB\_SENT-1} \frac{N^{(c)}}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N^{(c)}$ die Anzahl der Bits eines Funkblocks für ein gegebenes, einer Referenzmodulation entsprechendes Modulationsschema darstellt, $N_i$ die Anzahl der Informationsbits in dem Funkblock, welcher den i-ten empfangenen Datenblock enthält, darstellt, und ni bzw. n'i der Anzahl der Datenblöcke in dem Funkblock, welcher den i-ten empfangenen bzw. übertragenen Datenblock enthält, entspricht.

**8.** Verfahren nach Anspruch 1, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei das Verhältnis zwischen der Nettodatenrate und der Bruttodatenrate gemäß der folgenden Berechnung erhalten wird:

$$\frac{R_{net}}{R_0} = \frac{\sum_{i=0}^{NB\_RECEIVED-1} \frac{P_i}{n_i}}{\sum_{i=0}^{NB\_SENT-1} \frac{1}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N^{(c)}$ die Anzahl der Bits eines Funkblocks für ein gegebenes, einer Referenzmodulation entsprechendes Modulationsschema darstellt, $N_i$ die Anzahl der Informationsbits in dem Funkblock, welcher den i-ten empfangenen Datenblock enthält, darstellt, ni, bzw. n'i, der Anzahl der Datenblöcke in dem Funkblock, welcher den i-ten empfangenen bzw. übertragenen Datenblock enthält, entspricht, und $P_i N_i / N^{(c)}$ entspricht.

**9.** Entität eines Mobilfunkkommunikationsnetzwerks für ein Mobilfunkkommunikationssystem, in welchem die auf einer Funkverbindung übertragenen Daten durch das Codieren von Blöcken von Informationsbits erhalten werden, **dadurch gekennzeichnet, dass** sie Mittel (7) zum Bewerten der Qualität der besagten Funkverbindung ausgehend von der auf der besagten Verbindung übertragenen Nettodatenrate $R_{net}$ umfasst, wobei die besagte Qualität ausgehend von der relativen Nettodatenrate, d. h. dem Verhältnis $R_{net}/R_0$ zwischen der Nettodatenrate $R_{net}$ und der Bruttodatenrate $R_0$, bewertet wird, wobei die Bruttodatenrate von der Anzahl der innerhalb einer gegebenen Zeitspanne übertragenen Böcke abhängt und die Nettodatenrate von der Anzahl der entsprechenden korrekt empfangenen Blöcke abhängt.

**10.** Entität nach Anspruch 9, **dadurch gekennzeichnet, dass** sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} N_i}{\sum_{i=0}^{NB\_SENT-1} N_i^{(c)}}$$

wobei NB_SENT die Anzahl der während einer gegebenen Zeitspanne übertragenen Blöcke darstellt, NB_RECEIVED die Anzahl der entsprechenden korrekt empfangenen Blöcke darstellt, $N_i^{(c)}$ die Anzahl der Bits des i-ten übertragenen Blocks darstellt und $N_i$ die Anzahl der Informationsbits des i-ten korrekt empfangenen Blocks darstellt.

**11.** Entität nach einem der Ansprüche 9 und 10, **dadurch gekennzeichnet, dass** die Anzahl der Bits der übertragenen Bits von dem verwendeten Modulationsschema abhängt, wobei die Bruttodatenrate für ein gegebenes, einer sogenannten Referenzmodulation entsprechendes Modulationsschema bestimmt wird, ungeachtet des verwendeten Modulationsschemas.

**12.** Entität nach Anspruch 9, **dadurch gekennzeichnet, dass** sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} N_i}{NB\_SENT * N^{(c)}}$$

wobei NB_SENT die Anzahl der während einer gegebenen Zeitspanne übertragenen Blöcke darstellt, NB_RECEIVED die Anzahl der entsprechenden korrekt empfangenen Blöcke darstellt, $N^{(c)}$ die Anzahl der Bits eines mit einem gegebenen, einer sogenannten Referenzmodulation entsprechenden Modulationsschema übertragenen Blocks darstellt, und $N_i$ die Anzahl der Informationsbits des i-ten korrekt empfangenen Blocks darstellt.

13. Entität nach einem der Ansprüche 9 und 10, **dadurch gekennzeichnet, dass** die besagte Referenzmodulation ein Modulation mit geringerer Spektraleffizienz ist.

14. Entität nach Anspruch 9, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N_i^{(c)}$ die Anzahl der Bits in dem Funkblock, welcher den i-ten übertragenen Datenblock enthält, darstellt, $N_i$ die Anzahl der Informationsbits in dem Funkblock, welcher den i-ten empfangenen Datenblock enthält, darstellt, und ni bzw. n'i der Anzahl der Datenblöcke in dem Funkblock, welcher den i-ten empfangenen bzw. übertragenen Datenblock enthält, entspricht.

15. Entität nach Anspruch 9, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N^{(c)}$ die Anzahl der Bits eines Funkblocks für ein gegebenes, einer Referenzmodulation entsprechendes Modulationsschema darstellt, $N_i$ die Anzahl der Informationsbits in dem Funkblock, welcher den i-ten empfangenen Datenblock enthält, darstellt, und ni bzw. n'i der Anzahl der Datenblöcke in dem Funkblock, welcher den i-ten empfangenen bzw. übertragenen Datenblock enthält, entspricht.

16. Entität nach Anspruch 9, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} \frac{P_i}{n_i}}{\sum_{i=0}^{NB\_SENT-1} \frac{1}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N^{(c)}$ die Anzahl der Bits eines Funkblocks für ein gegebenes, einer Referenzmodulation entsprechendes Modulationsschema darstellt, $N_i$ die Anzahl der Informationsbits in dem Funkblock, welcher den i-ten empfangenen Datenblock enthält, darstellt, ni, bzw. n'i, der Anzahl der Datenblöcke in dem Funkblock, welcher den i-ten empfangenen bzw. übertragenen Datenblock enthält, entspricht, und $P_i N_i / N^{(c)}$ entspricht.

17. Mobilstation für ein Mobilfunkkommunikationssystem, in welchem die auf einer Funkverbindung übertragenen Daten durch das Codieren von Blöcken von Informationsbits erhalten werden, **dadurch gekennzeichnet, dass** sie Mittel (7) zum Bewerten der Qualität einer Funkverbindung ausgehend von der auf der besagten Verbindung übertragenen Nettodatenrate $R_{net}$ umfasst, wobei die besagte Qualität ausgehend von der relativen Nettodatenrate, d. h. dem Verhältnis $R_{net}/R_0$ zwischen der Nettodatenrate, $R_{net}$ und der Bruttodatenrate $R_0$, bewertet wird, wobei die Bruttodatenrate von der Anzahl der innerhalb einer gegebenen Zeitspanne übertragenen Blöcke abhängt und die Nettodatenrate von der Anzahl der entsprechenden korrekt empfangenen Blöcke abhängt.

18. Mobilstation nach Anspruch 17, **dadurch gekennzeichnet, dass** sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} N_i}{\sum_{i=0}^{NB\_SENT-1} N_i^{(c)}}$$

wobei NB_SENT die Anzahl der während einer gegebenen Zeitspanne übertragenen Blöcke darstellt, NB_RECEIVED die Anzahl der entsprechenden korrekt empfangenen Blöcke darstellt, $N_i^{(c)}$ die Anzahl der Bits des i-ten übertragenen Blocks darstellt und $N_i$ die Anzahl der Informationsbits des i-ten korrekt empfangenen Blocks darstellt.

19. Mobilstation nach einem der Ansprüche 17 und 18, **dadurch gekennzeichnet, dass** die Anzahl der Bits der übertragenen Bits von dem verwendeten Modulationsschema abhängt, wobei die Bruttodatenrate für ein gegebenes, einer sogenannten Referenzmodulation entsprechendes Modulationsschema bestimmt wird, ungeachtet des verwendeten Modulationsschemas.

20. Mobilstation nach Anspruch 17, **dadurch gekennzeichnet, dass** sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} N_i}{NB\_SENT * N^{(c)}}$$

wobei NB_SENT die Anzahl der während einer gegebenen Zeitspanne übertragenen Blöcke darstellt, NB_RECEIVED die Anzahl der entsprechenden korrekt empfangenen Blöcke darstellt, $N^{(c)}$ die Anzahl der Bits eines mit einem gegebenen, einer sogenannten Referenzmodulation entsprechenden Modulationsschema übertragenen Blocks darstellt, und $N_i$ die Anzahl der Informationsbits des i-ten korrekt empfangenen Blocks darstellt.

21. Mobilstation nach einem der Ansprüche 17 und 18, **dadurch gekennzeichnet, dass** die besagte Referenzmodulation ein Modulation mit geringerer Spektraleffizienz ist.

22. Mobilstation nach Anspruch 17, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} \frac{N_i}{n_i}}{\sum_{i=0}^{NB\_SENT-1} \frac{N_i^{(c)}}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N_i^{(c)}$ $N_i^{(c)}$ die Anzahl der Bits in dem Funkblock, welcher den i-ten übertragenen Datenblock enthält, darstellt, $N_i$ die Anzahl der Informationsbits in dem Funkblock, welcher den i-ten empfangenen Datenblock enthält, darstellt, und ni bzw. n'i der Anzahl der Datenblöcke in dem Funkblock, welcher den i-ten empfangenen bzw. übertragenen Datenblock enthält, entspricht.

23. Mobilstation nach Anspruch 17, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei sie Mittel zum Erhalten des Verhältnisses zwischen der Nettodatenrate und der Bruttodatenrate gemäß der folgenden Berechnung umfasst:

$$\frac{R_{net}}{R_0} = \frac{\sum_{i=0}^{NB\_RECEIVED-1} \frac{N_i}{n_i}}{\sum_{i=0}^{NB\_SENT-1} \frac{N^{(c)}}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N^{(c)}$ die Anzahl der Bits eines Funkblocks für ein gegebenes, einer Referenzmodulation entsprechendes Modulationsschema darstellt, $N_i$ die Anzahl der Informationsbits in dem Funkblock, welcher den i-ten empfangenen Datenblock enthält, darstellt, und ni, bzw. n'i, der Anzahl der Datenblöcke in dem Funkblock, welcher den i-ten empfangenen bzw. übertragenen Datenblock enthält, entspricht.

**24.** Mobilstation nach Anspruch 17, **dadurch gekennzeichnet, dass** die übertragenen Blöcke, oder Funkblöcke, je nach dem verwendeten Modulationsschema einen oder mehrere Blöcke, oder Datenblöcke, umfassen können, wobei sie Mittel zum Erhalten des Verhältnisses zwischen der Nettodatenrate und der Bruttodatenrate gemäß der folgenden Berechnung umfasst:

$$\frac{R_{n,t}}{R_0} = \frac{\sum_{i=0}^{NB\_RECEIVED-1} \frac{P_i}{n_i}}{\sum_{i=0}^{NB\_SENT-1} \frac{1}{n_i'}}$$

wobei NB_SENT die Anzahl der während einer gegebenen Zeitspanne übertragenen Datenblöcke darstellt, NB_RECEIVED die Anzahl der entsprechenden korrekt empfangenen Datenblöcke darstellt, $N^{(c)}$ die Anzahl der Bits eines Funkblocks für ein gegebenes, einer Referenzmodulation entsprechendes Modulationsschema darstellt, $N_i$ die Anzahl der Informationsbits in dem Funkblock, welcher den i-ten empfangenen Datenblock enthält, darstellt, ni, bzw. n'i, der Anzahl der Datenblöcke in dem Funkblock, welcher den i-ten empfangenen bzw. übertragenen Datenblock enthält, entspricht, und $P_i$ $N_i$ / $N^{(c)}$ entspricht.

**20**

3  1  4

ACK/NACK

5  2  6

ACK/NACK

7

$$\frac{Rnet}{Ro}$$

EP 1 179 911 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9912304 A

- GB 2330737 A

**Littérature non-brevet citée dans la description**

- GSM 03.64 Version 8.2.0 Release 1999. l'ETSI, 1999